# EUROPÄISCHE PATENTANMELDUNG

(11) **EP 4 570 572 A1**
(43) Veröffentlichungstag der Anmeldung: **18.06.2025**
(21) Anmeldenummer: 24219475.1
(22) Anmeldetag: 12.12.2024
(51) Int. Cl.: B60L 9/00, B60L 15/20, B60L 50/53, B60L 58/12, B60L 58/13

(54) **VERFAHREN ZUM STEUERN EINER VERSORGUNG EINES SPURGEBUNDENEN FAHRZEUGS MIT ELEKTRISCHER ENERGIE**

(30) Priorität: 13.12.2023 DE 102023212610
(71) Anmelder: Siemens Mobility GmbH, 81739 München (DE)
(72) Erfinder: Burg, Wilhelm, 96052 Bamberg (DE); Glinka, Martin, 91054 Buckenhof (DE); Hassler, Stefan, 91281 Kirchenthumbach, OT Neuzirkendorf (DE); Lottersberger, Christoph, 55130 Mainz (DE); Probst, Sebastian, 90408 Nürnberg (DE); Ruppert, Swen, 91096 Möhrendorf (DE)
(74) Vertreter: Siemens Patent Attorneys

(57) **Zusammenfassung**

Das erfindungsgemäße Verfahren zum Steuern einer Versorgung eines elektrischen Systems eines spurgebundenen Fahrzeugs mit elektrischer Energie, wobei das System mit einer ersten und mit einer zweiten Energiequelle alternativ und gleichzeitig betreibbar ist, wobei die erste Energiequelle ein fahrzeugexternes Energieversorgungsnetz und die zweite Energiequelle ein fahrzeuginternes Batteriesystem ist, umfasst die Schritte Bestimmen einer von den Energiequellen bereitzustellenden Gesamtleistung für zumindest einen von der ersten Energiequelle versorgten Streckenabschnitt einer von dem Fahrzeug zu befahrenden Strecke ist, und Aufteilen der ermittelten Gesamtleistung auf die erste und die zweite Energiequelle, wobei, unter Variation eines Anteils der ersten Energiequelle an der Gesamtleistung, die Aufteilung hinsichtlich eines jeweiligen Wertes zumindest eines Bewertungskriteriums optimiert wird.

## Beschreibung

Die Erfindung betrifft ein Verfahren zum Steuern einer Versorgung eines elektrischen Systems eines spurgebundenen Fahrzeugs mit elektrischer Energie, sowie ein spurgebundenes Fahrzeug, welches zur Durchführung des Verfahrens ausgestaltet ist.

Unter den Begriff spurgebundenes Fahrzeug fallen Schienenfahrzeuge sowie nicht schienengebundene elektrisch betreibbare Fahrzeuge, die Fahrstrom über Stromabnehmer aus einem Stromnetz beziehen. Ein Beispiel für ein nicht schienengebundenes Fahrzeug ist ein Oberleitungsbus.

Für die Versorgung insbesondere des Antriebs solcher spurgebundenen Fahrzeuge werden zunehmend hybride Konzepte mit mehreren unterschiedlichen Energiequellen eingesetzt. Als Energiequellen dienen dabei ein fahrzeugexternes Energieversorgungsnetz sowie ein zumindest eine Antriebsbatterie umfassendes fahrzeuginternes Batteriesystem . Die Energiequellen speisen dabei über eine jeweilige Einspeisungseinheit insbesondere das Antriebssystem sowie weitere elektrische Verbraucher, insbesondere eines Hilfsbetriebesystems, des spurgebundenen Fahrzeugs mit elektrischer Energie. Bezüglich solcher hybrider Systeme sei auf den internationalen Standard IEC 62864-1, Edition 1.0, vom Juni 2016, speziell auf das Kap. 4.2.3, verwiesen.

Für die Verbindung mit einem fahrzeugexternen Energieversorgungsnetz, welches beispielsweise eine parallel zu der befahrenen Strecke geführte Oberleitung oder Stromschiene umfasst, dient dabei eine Netzeinspeisungseinheit umfasst dabei neben einem Stromabnehmer üblicherweise einen Transformator sowie einen Gleichrichter, um die netzseitige Wechselspannung, typischerweise eine Einphasen-Wechselspannung, in eine Wechselspannung mit einem niedrigeren Spannungsniveau und diese nachfolgend in eine Gleichspannung zu wandeln, mit der ein Gleichspannungszwischenkreis des Antriebssystems gespeist wird. Bei einer netzseitigen Gleichspannung umfasst die Netzeinspeisungseinheit neben dem Stromabnehmer hingegen üblicherweise ein Filter sowie gegebenenfalls ergänzend einen Gleichspannungswandler, welcher den Gleichspannungszwischenkreis speist.

Über die Netzeinspeisungseinheit kann von dem Energieversorgungsnetz somit elektrische Leistung für das Antriebssystem und sonstige elektrische Verbraucher des Fahrzeugs eingespeist werden, im Gegenzug kann von dem Fahrzeug üblicherweise auch, beispielsweise bei einem Bremsvorgang, bei dem von Antriebsmotoren des Antriebssystems elektrische Energie generiert wird, Leistung in das Energieversorgungsnetz zurückgespeist werden.

Das Batteriesystem des Fahrzeugs ist über eine Batterieeinspeisungseinheit typischerweise ebenfalls mit dem Gleichspannungszwischenkreis des Antriebssystems sowie gegebenenfalls direkt mit sonstigen elektrischen Verbrauchern des Fahrzeugs verbunden. Die Batterieeinspeisungseinheit umfasst dabei üblicherweise einen gesteuerten Gleichspannungswandler bzw. Gleichspannungssteller, welcher durch Variation des Spannungsniveaus ein Aufladen oder Entladen der Antriebsbatterie des Batteriesystems bewirkt.

Die sonstigen elektrischen Verbraucher, insbesondere so genannte Hilfsbetriebe, werden üblicherweise von einem oder mehreren so genannten Hilfsbetriebeumrichtern (abgekürzt HBU) mit elektrischer Energie versorgt, wobei die Hilfsbetriebeumrichter beispielsweise ebenfalls mit dem Gleichspannungszwischenkreis verbunden sind.

Durch Vorsehen eines Batteriesystems kann das spurgebundene Fahrzeug in unterschiedlichen Versorgungsmodi betrieben werden. In netzlosen, also nicht von dem Energieversorgungsnetz versorgten Streckenabschnitten dient das Batteriesystem als ausschließliche Energiequelle zur Versorgung des elektrischen Systems des Fahrzeugs, insbesondere des Antriebssystems über die Batterieeinspeisungseinheit. In netzversorgten, also von dem Energieversorgungssystem versorgten Streckenabschnitten dient hingegen das Energieversorgungsnetz als ausschließliche Energiequelle. Das elektrische System des Fahrzeugs wird über die Netzeinspeisungseinheit mit elektrischer Energie versorgt, wobei neben der Versorgung des Antriebssystems und der sonstigen Verbraucher ergänzend die Antriebsbatterie über die Batterieeinspeisungseinheit aufgeladen werden kann. Diese verschiedenen Versorgungsmodi ermöglichen den Einsatz von spurgebundenen Fahrzeugen auch auf Strecken, die nicht durchgehend elektrifiziert, also von dem Energieversorgungsnetz versorgt sind.

Aufgabe der Erfindung ist es, den Betrieb eines spurgebundenen Fahrzeugs in den verschiedenen Versorgungsmodi zu verbessern.

Diese Aufgabe wird gelöst durch ein Verfahren und ein spurgebundenes Fahrzeug mit den jeweiligen Merkmalen der unabhängigen Patentansprüche. Ausgestaltungen des Verfahrens sind in abhängigen Patentansprüchen angegeben.

Das erfindungsgemäße Verfahren zum Steuern einer Versorgung eines elektrischen Systems eines spurgebundenen Fahrzeugs mit elektrischer Energie, wobei das System mit einer ersten und mit einer zweiten Energiequelle alternativ und gleichzeitig betreibbar ist, wobei die erste Energiequelle ein fahrzeugexternes Energieversorgungsnetz und die zweite Energiequelle ein fahrzeuginternes Batteriesystem ist, umfasst die Schritte Bestimmen einer von den Energiequellen bereitzustellenden Gesamtleistung für zumindest einen von der ersten Energiequelle versorgten Streckenabschnitt einer von dem Fahrzeug zu befahrenden Strecke ist, und Aufteilen der ermittelten Gesamtleistung auf die erste und die zweite Energiequelle, wobei, unter Variation eines Anteils der ersten Energiequelle an der Gesamtleistung, die Aufteilung hinsichtlich eines jeweiligen Wertes zumindest eines Bewertungskriteriums optimiert wird.

Die Erfindung sieht vor, für den Betrieb eines spurgebundenen Fahrzeugs, das mit einer ersten Energiequelle und mit einer zweiten Energiequelle sowohl alternativ als auch gleichzeitig betreibbar ist, zumindest ein Bewertungskriterium vorzugeben. Es wird die benötigte Gesamtleistung ermittelt. Der Wert des Bewertungskriteriums wird beispielsweise mit einer vorgegebenen Aufteilung der benötigten Gesamtleistung auf die Energiequellen ermittelt. Dabei wird ein Anteil für die erste Energiequelle im Bereich zwischen null und einhundert Prozentpunkten angesetzt, es wird also ein Betrieb nur mit der zweiten Energiequelle, ein Betrieb mit beiden Energiequellen oder ein Betrieb nur mit der ersten Energiequelle betrachtet. Es erfolgt eine Optimierung dieses Wertes durch Variation der Aufteilung der benötigten Gesamtleistung auf die Energiequellen. Es wird also diejenige Aufteilung der Gesamtleistung ermittelt, bei der das Bewertungskriterium einen optimalen Wert annimmt.

Es liegt im Rahmen der Erfindung, den optimalen Wert des Bewertungskriteriums bei verschiedenen Aufteilungen auf die beiden Energiequellen vorab, also bevor das Fahrzeug den Streckenabschnitt bzw. die Strecke befährt, zu bestimmen und das Ergebnis, also den optimierten Wert oder eine Information über die aus diesem resultierende Aufteilung, beispielsweise in einer Steuereinheit des elektrischen Systems des Fahrzeugs zu speichern. Im Betrieb, also während des Befahrens des Streckenabschnitts bzw. der Strecke, kann dann für die Steuerung der verschiedenen Komponenten, insbesondere der Netzeinspeisungseinheit und der Batterieeinspeisungseinheit, auf diese gespeicherten Ergebnisse zurückgegriffen werden. Insbesondere da eine Strecke von dem spurgebundenes Fahrzeug in der Regel mehrfach befahren wird, ist eine Vorab-Bestimmung und Speicherung eines optimalen Werts für das Bewertungskriterium bzw. einer optimalen Aufteilung sinnvoll. Grundsätzlich kann die Bestimmung jedoch alternativ auch während des Betriebs des Fahrzeugs erfolgen. Ebenso können die bestimmten Werte während des Betriebs des Fahrzeugs laufend oder beispielsweise periodisch überprüft und gegebenenfalls geändert werden, um einen optimalen Wert zu erzielen.

Der Betrieb des spurgebundenen Fahrzeugs umfasst dabei verschiedene Betriebsmodi für den Antrieb, insbesondere ein Beschleunigen, ein Bremsen, ein Rollen und ein Halten, wobei jeweils sonstige elektrische Verbraucher, insbesondere Hilfsbetriebe, ergänzend aktiv sein können. Während eines Bremsens kann von Antriebsmotoren generierte elektrische Energie beispielsweise in das Energieversorgungsnetz und/oder in das Batteriesystem zum Aufladen der Antriebsbatterie zurückgespeist werden, sofern diese jeweils aufnahmefähig sind.

Grundsätzlich kann die Aufteilung hinsichtlich des Wertes eines einzigen Bewertungskriteriums erfolgen, es können jedoch weitere Bewertungskriterien ergänzend berücksichtigt werden. Eine Optimierung erfolgt in diesem Fall unter Berücksichtigung aller Bewertungskriterien, welche gegebenenfalls geeignet gewichtet werden, um deren unterschiedliche Bedeutung zu berücksichtigen. Die Berücksichtigung weiterer Bewertungskriterien kann entsprechend derart erfolgen, dass bei der Aufteilung von einem Optimum des Wertes eines ersten Bewertungskriteriums abgewichen wird, um ebenfalls den Wert eines zweiten Bewertungskriteriums, welches zudem eine höhere Gewichtung aufweist, zu optimieren. Im Ergebnis können bezüglich beider Bewertungskriterien gegebenenfalls keine optimalen Werte erzielt werden, das bestimmte Wertepaar jedoch eine Optimierung bezüglich beider Bewertungskriterien darstellen.

Nach einer Weiterbildung des erfindungsgemäßen Verfahrens ist das Bewertungskriterium eine Verlustleistung von mit den Energiequellen jeweils verbundenen Komponenten des Systems, wobei die Aufteilung hinsichtlich einer Gesamt-Verlustleistung optimiert wird.

Hierbei kann insbesondere die Verlustleistung in der Einspeisungseinheit der jeweiligen Energiequelle bestimmt werden. Die Netzeinspeisungseinheit kann dabei einen Transformator und einen oder mehrere steuerbare Gleichrichter sowie als Hilfsbetriebe ein Kühlsystem zur Kühlung dieser Komponenten umfassen. Die Batterieeinspeisungseinheit kann hingegen einen steuerbaren Gleichspannungswandler bzw. Gleichspannungssteller umfassen. Die Optimierung erfolgt insbesondere hinsichtlich einer Minimierung der Gesamt-Verlustleistung dieser Komponenten. Es wird also beispielsweise bei einer bestimmten Aufteilung der Gesamtleistung sowohl für die Netzeinspeisung als auch für die Batterieeinspeisung eine jeweilige Verlustleistung berechnet und die Aufteilung der Gesamtleistung auf die Teilleistungen der beiden Energiequellen so gewählt, dass die Gesamt-Verlustleistung, also die Summe der einzelnen Verlustleistungen, minimal ist. Zusätzlich können auch Netzverluste, also Verluste im Energieversorgungsnetz, berücksichtigt und damit eine gesamtsystemische Betrachtung vorgenommen werden.

Ausgehend von den bestimmten Verlustleistungen kann als Bewertungskriterium ebenfalls eine Gesamt-Verlustenergie dienen. Dabei werden beispielsweise die Verlustleistungen für bestimmte Zeitintervalle, welche repräsentativ für bestimmte Streckenabschnitte sind, berechnet und über diese Zeitintervalle integriert oder addiert.

Nach einer weiteren Weiterbildung des erfindungsgemäßen Verfahrens ist das Bewertungskriterium eine für den jeweiligen Streckenabschnitt oder die Strecke benötigte Gesamtenergie.

Nach einer weiteren Weiterbildung des erfindungsgemäßen Verfahrens sind das Bewertungskriterium für den jeweiligen Streckenabschnitt oder die Strecke verursachte Energiekosten des Energieversorgungsnetzes.

Insbesondere die Verlustleistungen in den genannten Komponenten hängen stark von der Stromstärke ab, da diese annähernd quadratisch in die Verlustleistung eingeht. Ein optimierter Wert für die jeweilige Verlustleistung bzw. der Gesamt-Verlustleistung hängt somit stark von der aktuell von der jeweiligen Energiequelle bezogenen Leistung ab.

Ähnlich kann es sich auch für den Bezug von Leistung von dem Energieversorgungsnetz verhalten, sofern dieses eine bestimmte Tarifstruktur besitzt, nach der ein hoher Leistungsbezug bzw. eine Spitzenlast, insbesondere die Überschreitung eines bestimmten Leistungs-Schwellenwertes, zu einer deutlichen Erhöhung des Netz-Entgelts führt. Eine Optimierung des Wertes bezüglich des Bewertungskriteriums der Energiekosten bewirkt somit vorteilhaft, dass Spitzenlasten und damit erhöhte Netz-Entgelte vermieden werden.

Nach einer weiteren Weiterbildung des erfindungsgemäßen Verfahrens sind das Bewertungskriterium Betriebsdaten von mit der jeweiligen Energiequelle verbundenen elektrischen Komponenten des Systems, welche eine Lebensdauer der Komponenten beeinflussen.

Nach einer weiteren Weiterbildung des erfindungsgemäßen Verfahrens sind das Bewertungskriterium Betriebsdaten des Batteriesystems.

Nach einer weiteren Weiterbildung des erfindungsgemäßen Verfahrens sind das Bewertungskriterium Daten des jeweiligen Streckenabschnitts oder der Strecke.

Beispiele für ein weiteres Bewertungskriterium sind eine Lebensdauer von Komponenten, eine Temperatur bzw. eine Einhaltung von vorgegebenen Soll-Temperaturen von Komponenten, sowie ein Ladezustand des Batteriesystems. Beispielsweise kann durch Alterung oder akute Erwärmung einer Komponente deren Innenwiderstand sich so verändern, dass sich die optimale Leistungsaufteilung auf die beiden Energiequellen verändert. Ein weiteres Bewertungskriterium kann entsprechend insbesondere Betriebsdaten von Komponenten wie beispielsweise eine Temperatur und ein Innenwiderstand umfassen. Der Begriff Betriebsdaten umfasst dabei auch veränderliche Parameter, die im Voraus berechnet werden können.

Alternativ oder ergänzend kann der Ladezustand des Batteriesystems berücksichtigt werden, da die in dem Batteriesystem gespeicherte elektrische Energie für das Befahren von Streckenabschnitten ohne Energieversorgungsnetz benötigt wird. Außerdem kann das Batteriesystem während der Verbindung mit dem Energieversorgungsnetz sowie insbesondere bei längeren Halten aufgeladen werden. Diese Energieaufnahme bzw. das Rückspeisen in das Batteriesystem ist ebenfalls von dem Begriff Betrieb umfasst. Mithilfe von Streckendaten der zu befahrenden Strecke bzw. einer vorausschauenden Logik kann der benötigte Ladezustand und damit die nutzbare Energie des Batteriesystems ermittelt werden, wobei die Strecke aus mehreren netzversorgten und netzlosen Teilstrecken bzw. Streckenabschnitten bestehen kann. Die nutzbare Energie des Batteriesystems in netzversorgten Streckenabschnitten, also als Unterstützung der Netzeinspeisung, und die notwendige Aufladung werden unter Berücksichtigung der notwendigen Energie bzw. des benötigten Batterieladezustands, insbesondere jeweils am Ende der netzversorgten Streckenabschnitte, durch eine vorausschauende Logik bestimmt. Es ist dabei vorteilhaft, wenn Fahrprofile und notwendigen Leistungsverläufe bekannt sind und auch der aktuelle Beladungszustand, Zuladungs-Zu- und Abgänge, Wetterdaten (Wind, Temperatur u.a.), Steigungen im Streckenverlauf und ähnliches bekannt sind. Sofern ein zu niedriger Ladezustand festgestellt wird, kann vom Optimum der Aufteilung abgewichen werden, indem das Batteriesystem beim Fahren weniger Leistung abgibt und/oder beim Halten mehr Leistung aufnimmt und/oder beim Bremsen mehr generierte Leistung aufnimmt. Wird ein höherer Ladezustand als benötigt festgestellt, kann ebenfalls vom Optimum der Aufteilung abgewichen werden, indem das Batteriesystem beim Fahren mehr Leistung abgibt und/oder beim Halten weniger Leistung aufnimmt und/oder beim Bremsen weniger generierte Leistung aufnimmt.

Die nutzbare Energie des Batteriesystems in netzversorgten Streckenabschnitten kann beispielsweise derart verteilt werden, dass der über eine bestimmte Strecke bzw. über eine bestimmte Zeit anfallende Gesamtenergiebedarf minimiert wird.

Beispielsweise kann insbesondere in Situationen mit einem großen Leistungsbedarf des Antriebssystems und/oder des Hilfsbetriebesystems, in denen die absoluten Verluste bei der Einspeisung überverhältnismäßig hoch sind, die Einspeisung durch den Energiespeicher bzw. das Batteriesystem verringert werden. Demgegenüber kann in Situationen mit niedrigem Leistungsbedarf, in denen sich eine Abweichung vom Optimum quantitativ weniger stark auswirkt, von diesem energetisch sinnvollen Optimum abgewichen werden kann, um beispielsweise den Ladezustand des Batteriesystems zu schonen.

Beispielsweise kann insbesondere die Aufladung des Batteriesystems optimiert werden. Die für das Befahren einer Strecke benötige Aufladung wird entsprechend unter Berücksichtigung von Fahr- sowie Stillstandszeiten berechnet und derart gestaltet, dass das Bewertungskriterium optimiert wird, also beispielsweise die Gesamt-Verlustleistung der beiden Energiequellen möglichst niedrig ist, und gleichzeitig die beschriebene notwendige Aufladung des Batteriesystems sichergestellt wird. Es wird beispielsweise berechnet, welche Verluste bei der Aufladung des Batteriesystems in Zeiten schwacher Verbraucherleistung, beispielsweise Stillstandszeiten, gegenüber Verlusten in Zeiten starker Verbraucherleistung, beispielsweise Beschleunigungszeiten, anfallen. Abhängig davon wird die Ladeleistung in allen Phasen so bestimmt, dass die über die Zeit bzw. über die Strecke integrierten Gesamtverluste der Energiequellen möglichst klein sind. Insbesondere kann bei längeren Haltezeiten die Ladeleistung soweit reduziert werden, dass die Verluste sowohl auf Seiten der Einspeisungseinheit als auch des Batteriesystems gering sind.

Das Batteriesystem kann insbesondere dann aufgeladen werden, wenn der Leistungsbedarf durch den Betrieb niedrig ist. Damit kann die bei geringer Leistungsaufnahme üblicherweise auftretende relativ hohe Verlustleistung vermieden bzw. verringert werden.

Damit ergibt sich für die Einspeisung von dem Energieversorgungsetz eine Reduzierung der maximalen Leistung, da vorausschauend die Aufladung des Energiespeichers bzw. des Batteriesystems auf den gesamten Bereich des netzversorgten Streckenabschnittes verteilt werden kann. Gegenüber einer zeitlich späteren spontanen Erhöhung der Ladeleistung zum Aufladen aufgrund eines unter einen Schwellenwert sinkenden Ladezustands des Batteriesystems wird ein frühzeitiges Aufladen mit besserem Wirkungsgrad und geringerer Eingangsleistung bewirkt.

Die Komponenten der Einspeisungseinheiten können damit grundsätzlich kleiner ausgelegt werden, da die Verluste kleiner ausfallen und der Energiefluss gleichmäßiger über die Zeit verteilt wird. Beides verringert die Ansprüche an eine thermische Belastbarkeit der Komponenten, beispielsweise von Wickelgütern wie den Wicklungen des Transformators. Vorteilhaft können damit Gewicht und Kosten eingespart und über die Auslegung weiterer Bauteile der Komponenten gegebenenfalls weitere Energieeffizienzsteigerung erzielt werden.

Eine Lebensdauer von Komponenten kann bei der Aufteilung der Gesamtleistung ebenfalls berücksichtigt werden. Beispielsweise besitzen Batteriezellen des Batteriesystems typischerweise eine längere Lebensdauer, wenn kleinere Entlade- und Auflade-Zyklen gegenüber tieferen Zyklen bevorzugt werden sowie sehr hohe bzw. sehr niedrige Ladezustände vermieden werden. Ferner kann die Aufteilung so gewählt werden, dass starke Temperaturschwankungen von Komponenten, beispielsweise von Leistungshalbleitern in den Komponenten, insbesondere den Wandlern, vermieden werden, wodurch die Lebensdauer dieser Bauteile erhöht wird. Aus einem Lebensdauermodell einer Komponente lässt sich beispielsweise ein Leistungsreduktionswert bestimmen, ab dem ein signifikanter oder ein zu erreichender Lebensdauergewinn für die Komponente bzw. deren einer Alterung ausgesetzten Bauteile eintritt.

Ebenfalls kann berücksichtigt werden, dass eine Leistungsreduktion für eine der Energiequellen mit einer Leistungserhöhung der anderen Energiequelle verbunden ist. Die Leistungserniedrigung bzw. -erhöhung ist mit Temperaturhüben verbunden. Hierbei kann beispielsweise ausgenutzt werden, dass kleinere zusätzliche Temperaturhübe des Gleichspannungswandlers des Batteriesystems nur mit einer kleinen Lebensdauerverkürzung der Leistungshalbleiter-Bausteine dieser Komponente verbunden sind, gleichzeitig jedoch die reduzierten großen Temperaturhübe des Gleichrichters eine vergleichsweise hohe Lebensdauerverlängerung der Leistungshalbleiter-Bausteine dieser Komponente bewirken. Die Lebensdauer kann somit ein weiteres Bewertungskriterium darstellen und für die Aufteilung der Gesamtleistung auf die Energiequellen berücksichtigt werden. Dabei kann eine geeignete Gewichtung der mehreren Bewertungskriterien erfolgen. Energiegewinn und Lebensdauereinbuße und umgekehrt werden dabei gegeneinander abgewogen.

Alternativ oder ergänzend kann die Temperatur und/oder die Temperaturentwicklung als ein Bewertungskriterium bei der Aufteilung der Gesamtleistung berücksichtigt werden. Da die Verluste auch die Temperaturentwicklung der Innenwiderstände beeinflusst und die Temperatur wiederum den Wert der Innenwiderstände bestimmt und dieser wiederum die Verlustleistung, kann die Aufteilung beispielsweise zeitlich derart gestaltet sein, dass die Temperaturentwicklung so gesteuert wird, dass zum einen prognostizierte Verläufe bzw. Änderungen der Innenwiderstände über den Gesamtzyklus zu einem gesamtoptimierten Energieverbrauch führen, und zum anderen eine mögliche Abregelung aufgrund einer Überhitzung einzelner Komponenten verhindert wird. Beispielsweise kann, wenn bei kurzen Stillstandszeiten eine Schnellladung des Batteriesystems prognostiziert bzw. geplant wird, der Transformator der Netzeinspeisungseinheit vorab thermisch entlastet werden. Dadurch wird dieser auf die gegebenenfalls stark belastende Schnellladung thermisch optimal voreingestellt, eine Abschaltung durch Überhitzung des Transformators verhindert. Es können somit bei Betrachtung des Gesamtzyklus vorausschauend erforderliche Abkühlphasen eingeplant werden.

Alternativ oder ergänzend können Betriebsdaten des Batteriesystems wie beispielsweise die Temperatur von Batteriezellen und/oder die Außentemperatur bei der Aufteilung der Gesamtleistung berücksichtigt werden. Das Batteriesystem als zweite Energiequelle muss beispielsweise bei niedrigen Außentemperaturen unter Umständen beheizt werden, insbesondere wenn ihr Beitrag zur Gesamtleistung gering ist und eine Verlustleistung in den Batteriezellen aufgrund eines fließenden Entladestroms nicht ausreichend zu deren Erwärmung ist. Es kann dabei energetisch günstiger sein, den Anteil des Batteriesystems an der Gesamtleistung zu erhöhen, damit sich dieses stärker erwärmt. Selbst wenn dadurch ihre Verlustleistung und die Gesamt-Verlustleistung steigen sollte, kann durch Einsparung einer ergänzenden Erwärmung der Batteriezellen ein energetisch günstigerer Betrieb erzielt werden.

Beispielsweise kann das Batteriesystem auch ganz abgeschaltet werden bzw. sein Anteil an der Gesamtleistung auf null Prozentpunkte reduziert werden . Die Batterieeinspeisungseinheit, insbesondere der Gleichspannungswandler, generiert bei geringer Leistung und auch im Leerlauf Verluste. Bei geringer Hilfsbetriebeleistung und ohne Antrieb kann es daher energetisch günstiger sein, das Batteriesystem zeitweise vollständig abzuschalten und die Leistung ausschließlich aus dem Energieversorgungsnetz zu beziehen. Wenn andererseits der Ladezustand des Batteriesystems sehr hoch ist, kann in gleicher Weise beispielsweise der Gleichrichter der Netzeinspeisungseinheit abgeschaltet werden, da auch in dieser Leerlaufverluste in dem Gleichrichter und dem Transformator entstehen.

Die Erfindung wird im Folgenden anhand von Ausführungsbeispielen näher erläutert. Es zeigen in schematischer Darstellung
- Fig. 1: ein elektrisches System eines spurgebundenen Fahrzeugs, das mit zwei Energiequellen betreibbar ist,
- Fig. 2: eine Ausführungsform des Verfahrensablaufs,
- Fig. 3: eine Abhängigkeit der Gesamt-Verlustleistung vom Anteil einer Energiequelle an der Gesamtleistung,
- Fig. 4: den Ladezustand einer Batterie bei verschiedenen Streckenpunkten,
- Fig. 5: ein Leistung-Zeit-Diagramm zur Veranschaulichung einer Ausführungsform der Erfindung,
- Fig. 6: ein Leistung-Zeit-Diagramm zur Veranschaulichung einer weiteren Ausführungsform der Erfindung,
- Fig. 7: ein Leistung-Zeit-Diagramm zur Veranschaulichung einer weiteren Ausführungsform der Erfindung,
- Fig. 8: ein Temperatur-Zeit-Diagramm zur Veranschaulichung einer weiteren Ausführungsform der Erfindung,
- Fig. 9: zwei Temperatur-Zeit-Diagramme zur Veranschaulichung einer weiteren Ausführungsform der Erfindung, und
- Fig. 10: eine weitere Ausführungsform des Verfahrensablaufs.

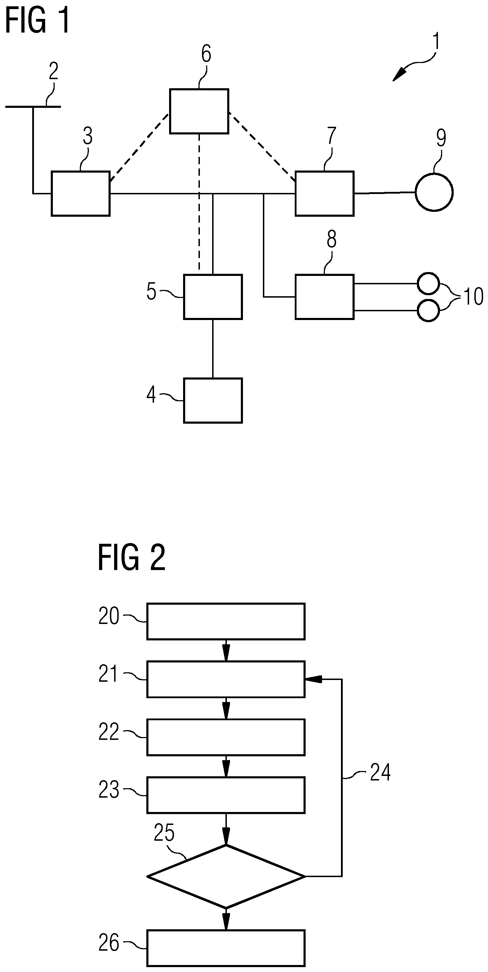

Fig.1 zeigt schematisch ein elektrisches System 1 eines spurgebundenen Fahrzeugs, insbesondere eines Schienenfahrzeugs, welches mit einem Energieversorgungsnetz 2, insbesondere einem Bahnnetz, als eine erste elektrische Energiequelle verbunden ist. Die Verbindung des Systems mit dem Energieversorgungsnetz 2 erfolgt über eine Netzeinspeisungseinheit 3 des elektrischen Systems, welche beispielsweise einen Stromabnehmer, einen Transformator sowie einen Gleichrichter umfasst. Der Stromabnehmer ist dabei mit beispielsweise einer Oberleitung des Energieversorgungsnetzes 2 verbindbar. Der mit dem Stromabnehmer verbundene Transformator transformiert die an der Oberleitung anliegende beispielhafte Einphasen-Wechselspannung auf ein niedrigeres Spannungsniveau. Der mit dem Transformator verbundene Gleichrichter, beispielsweise als steuerbarer Vierquadrantensteller (typischerweise abgekürzt mit 4QS) ausgestaltet, wandelt die transformierte Wechselspannung in eine Gleichspannung, mit welcher er einen Gleichspannungszwischenkreis des elektrischen Systems speist. Sofern das Energieversorgungsnetz eine Gleichspannung an der Oberleitung bereitstellt, kann die Netzeinspeisungseinheit 3 alternativ ein Eingangsfilter sowie gegebenenfalls einen insbesondere steuerbaren Gleichspannungswandler umfassen, über welchen bzw. welche der Gleichspannungszwischenkreis gespeist wird.

Als eine zweite Energiequelle des elektrischen Systems ist zumindest ein Batteriesystem 4, umfassend beispielsweise zumindest eine Traktionsbatterie, in dem Fahrzeug vorgesehen, wobei das Batteriesystem 4 über eine Batterieeinspeisungseinheit 5, beispielsweise als ein steuerbarer Gleichspannungswandler bzw. Gleichspannungssteller ausgestaltet, mit dem Gleichspannungszwischenkreis verbunden ist.

Mit dem Gleichspannungszwischenkreis sind ebenfalls zumindest ein Wechselrichter 7, beispielsweise als ein steuerbarer Pulswechselrichter (typischerweise abgekürzt mit PWR) ausgestaltet, sowie zumindest ein Hilfsbetriebeumrichter 8 (typischerweise abgekürzt mit HBU) verbunden. Der Wechselrichter 7 wandelt die Gleichspannung des Gleichspannungszwischenkreises in eine Wechselspannung variabler Frequenz und Amplitude, mit welcher zumindest ein Antriebsmotor 9 versorgt wird. Der Hilfsbetriebeumrichter 8 wandelt die Gleichspannung des Gleichspannungszwischenkreises hingegen in beispielsweise eine oder mehrere unterschiedliche Wechselspannungen konstanter oder variabler Frequenz um, mit welcher bzw. welchen Hilfsbetriebe 10 des elektrischen Systems des Fahrzeugs versorgt werden.

Beide Einspeisungseinheiten 3, 5 sowie der Wechselrichter 7 sind mit einer Steuereinheit 6 des Fahrzeugs über gestrichelt dargestellte Steuerleitungen verbunden, wobei die Steuereinheit 6 beispielsweise als eine zentrale Antriebssteuerung des Fahrzeugs (typischerweise abgekürzt mit ASG) ausgestaltet ist. Die Steuereinheit 6 führt Berechnungs- und Optimierungsverfahren durch, um eine für die elektrischen Verbraucher des Fahrzeugs, insbesondere Antriebsmotoren 9 und Hilfsbetriebe 10, benötigte Gesamtleistung auf die beiden Energiequellen 2, 4 aufzuteilen.

Fig. 2 stellt einen Ausschnitt des in der Steuereinheit 6 ausgeführten Verfahrens zur Aufteilung der Gesamtleistung dar, wobei als Bewertungskriterium für die Aufteilung eine Gesamt-Verlustleistung dient. Zunächst wird die aktuell benötigte Gesamtleistung bestimmt (Schritt 20). Nachfolgend wird diese bestimmte Gesamtleistung aufgeteilt auf die beiden Energiequellen Energieversorgungsnetz 2 und Batteriesystem 4 (Schritt 21), und es werden die zugehörigen Verlustleistungen in der Netzeinspeisungseinheit VN und in der Batterieeinspeisungseinheit VB bestimmt (Schritt 22). Durch Addition wird die Gesamt-Verlustleistung V = VN + VB beider Energiequellen berechnet (Schritt 23). Anschließend wird geprüft, ob durch die Aufteilung ein minimaler oder ein insbesondere vorgegebener ausreichend niedriger Wert für die bestimmte Gesamt-Verlustleistung erreicht wird (Schritt 25). Sofern der Wert nicht erreicht wird, wird die Berechnung für eine geänderte Aufteilung der Gesamtleistung wiederholt durchgeführt (Schleife 24), bis der minimale bzw. der ausreichend niedrige Wert der Gesamt-Verlustleistung als Optimum des Bewertungskriteriums vorliegt (Schritt 25). Beispielsweise wird die Schleife 24 mehrmals durchlaufen, um ein Optimum der Gesamt-Verlustleistung zu bestimmen. Die diesem Optimum zugehörige Leistungsaufteilung wird schließlich durch die Steuereinheit 6 eingestellt (Schritt 26).

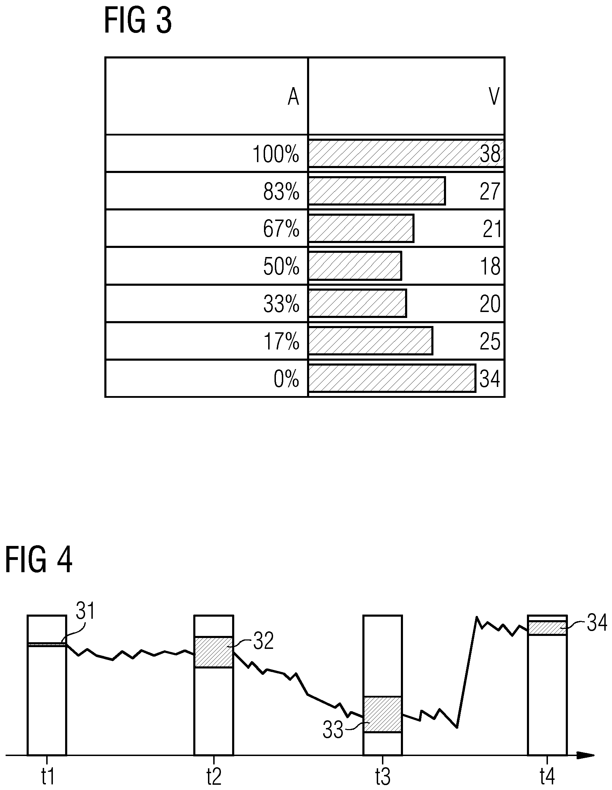

Fig. 3 zeigt ein beispielhaftes Ergebnis der in dem Verfahren zu Fig. 2 beschriebenen mehrmaligen Berechnung. Die Tabelle zeigt die in Schritt 23 berechnete Gesamt-Verlustleistung V bei unterschiedlichen Anteilen A der Leistung des Batteriesystems 4 an der Gesamtleistung. In dem beispielhaften Fall führt eine hälftige bzw. symmetrische Aufteilung auf das Batteriesystem 4 und das Energieversorgungsnetz 2 zu einem Minimum der Gesamt-Verlustleistung V. Entsprechend wird die Gesamtleistung durch geeignete Steuerung der Einspeisungseinheiten 3, 5 durch die Steuereinheit 6 auf die erste und die zweite Energiequelle aufgeteilt.

Fig. 4 zeigt schematisch einen jeweiligen Ladezustand bzw. Ladezustandsbereich 31, 32, 33, 34 des Batteriesystems 4 an verschiedenen Stellen einer von dem Fahrzeug befahrenen Strecke und damit zu nacheinander liegenden Zeitpunkten. Die zwischen zwei Zeitpunkten zurückgelegte Strecke wird jeweils als ein Streckenabschnitt betrachtet. Ausgehend von einem zum Zeitpunkt t1 vorliegenden Ladezustand 31 und bekannten Daten der Strecke bzw. der einzelnen Streckenabschnitte (Steigungen, Entfernungen, Netzversorgung, Lademöglichkeiten u.a.) wird der jeweils erwartete Ladezustand zu den nachfolgenden Zeitpunkten t2, t3 und t4 berechnet. Im Beispiel liegen folgende Randbedingungen der Berechnung zugrunde: Im Zeitraum t1 - t2 bzw. dem korrespondierenden zu befahrenen Streckenabschnitt steht ein Energieversorgungsnetz zur Verfügung. Im Zeitraum t2 - t3 wird ein netzloser Streckenabschnitt befahren, d.h. die benötigte Gesamtleistung muss durch das Batteriesystem erbracht werden. In dem ebenfalls netzlosen Streckenabschnitt zwischen t3 und t4 befindet sich beispielhaft ein Haltepunkt mit einer Ladestation, an welcher das Batteriesystem während eines Halts aufgeladen werden kann. Bei der Aufteilung der Gesamtleistung auf das Energieversorgungsnetz bzw. die erste Energiequelle und das Batteriesystem bzw. die zweite Energiequelle wird neben einer möglichst niedrigen Gesamt-Verlustleistung auch berücksichtigt, dass zu Beginn des netzlosen Streckenabschnitts, also zum Zeitpunkt t2, das Batteriesystem einen Mindest-Ladezustand aufweisen muss, der beispielsweise dem unteren Wert des Ladezustandsbereichs 32 entspricht, und dass zu Beginn des nachfolgenden netzlosen Streckenabschnitts, also zum Zeitpunkt t3, das Batteriesystem einen Mindest-Ladezustand aufweisen muss, der dem unteren Wert des Ladezustandsbereichs 33 entspricht. Insbesondere verdeutlicht dieses Beispiel, dass bei der Aufteilung der Gesamtleistung auch Streckenabschnitte berücksichtigt werden müssen, die nicht von dem Energieversorgungsnetz versorgt werden. Daher wird beispielsweise in dem ersten Streckenabschnitt t1 bis t2 die Gesamtleistung derart aufgeteilt, dass am Ende des Streckenabschnitts bzw. zu dem Zeitpunkt t2 der Ladezustand des Batteriesystems in dem Ladezustandsbereich 32 liegt.

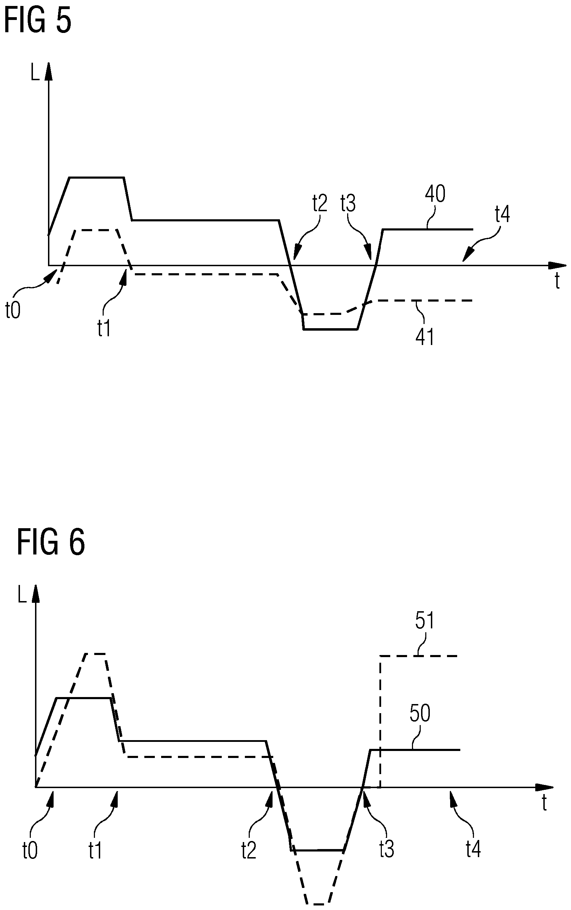

Fig. 5 zeigt ein Beispiel für die berechnete Leistung L, die bei optimierter Aufteilung der Gesamtleistung während einer Fahrt von dem Energieversorgungsnetz (durchgezogene Linie 40) und von dem Batteriesystem (gestrichelte Linie 41) bezogen wird. Positive Werte bedeuten eine Einspeisung in das Fahrzeug bzw. ein Entladen des Batteriesystems, negative Werte hingegen eine Rückspeisung in das Energieversorgungsnetz bzw. ein Laden des Batteriesystems. Im Unterschied zu dem Beispiel der Fig. 4 ist das Fahrzeug über die gesamte Strecke mit dem Energieversorgungsnetz verbunden bzw. ist die gesamte Strecke von dem Energieversorgungsnetz versorgt. Als Bewertungskriterium dient der Gesamtverlust über die Strecke.

Zwischen den Zeitpunkten t0 und t1 wird beispielhaft eine hohe Gesamtleistung insbesondere für den Antrieb benötigt, da das Fahrzeug anfährt bzw. in einer Beschleunigungsphase befindet. Die Optimierung des Bewertungskriteriums Gesamtverlust ergibt die dargestellte Aufteilung der Gesamtleistung auf die beiden Energiequellen.

Zwischen t1 und t2 wird eine Antriebsleistung mittlerer Höhe benötigt, da sich das Fahrzeug beispielhaft in einer Beharrungsphase befindet. Bei Minimierung des Gesamtverlusts ergibt sich als optimaler Betrieb, die Leistung vom Energieversorgungsnetz 2 zu beziehen und gleichzeitig das Batteriesystem 4 mit geringer Leistung aufzuladen. Zwischen t2 und t3 bremst das Fahrzeug, wobei der zumindest eine Antriebsmotor nach dem Bespiel der Fig. 1 generatorisch betrieben wird und die generierte elektrische Energie über den Wechselrichter 7 in den Gleichspannungszwischenkreis gespeist wird. Diese Energie kann sowohl in das Versorgungsnetz 2 zurückgespeist werden als auch das Batteriesystem 4 mit hoher Leistung geladen werden. Zwischen t3 und t4 ist vorgesehen, dass das Fahrzeug hält, aber einige Hilfsbetriebe 10 in Betrieb sind. Da hierfür nur eine geringe Leistung erforderlich ist, ergibt die Optimierung einen Bezug der Leistung über die Netzeinspeisungseinheit 3 bei gleichzeitigem Aufladen des Batteriesystems 4.

Fig. 6 zeigt die vom Energieversorgungsnetz 2 bezogene Leistung mit der in Fig. 5 dargestellten Optimierung (durchgezogene Linie 50) und ohne eine solche Optimierung (gestrichelte Linie 51). Positive Werte bedeuten eine Einspeisung in das Fahrzeug, negative Werte eine Rückspeisung in das Versorgungsnetz. Die Fahrstecke ist durchgehend von dem Energieversorgungsnetz versorgt. Die Energieversorgung durch das Batteriesystem des Fahrzeugs ist nicht dargestellt (.

Ohne Optimierung (51) wird Leistung lediglich vom Energieversorgungsnetz bezogen oder in das Energieversorgungsnetz rückgespeist. Zwischen den Zeitpunkten t0 und t1 wird ohne Optimierung die gesamte, relativ hohe Leistung für die Beschleunigung des Fahrzeugs vom Energieversorgungsnetz bezogen, mit Optimierung (50) wird sie hingegen entsprechend der Fig. 4 unter den beiden Energiequellen aufgeteilt. Zwischen t1 und t2 entfällt ohne Optimierung das Laden der Batterie mit der Folge, dass die vom Netz bezogene Leistung geringer ist als bei Durchführung der Optimierung. Zwischen t3 und t4, nämlich beim Halten an einem Haltpunkt mit guter Netzanbindung, ist ladezustandsabhängig ein Aufladen des Batteriesystems vorgesehen, welches ohne Optimierung spontan mit sehr hoher Leistung und entsprechend hoher Leistungsaufnahme vom Energieversorgungsnetz erfolgt. Eine solche Vorgehensweise ist insbesondere nachteilig für die Lebensdauer der Batterie und wird durch das optimierte Verfahren (50) vermieden, indem es das Batteriesystem über einen längeren Zeitraum und mit einer niedrigeren Leistung auflädt.

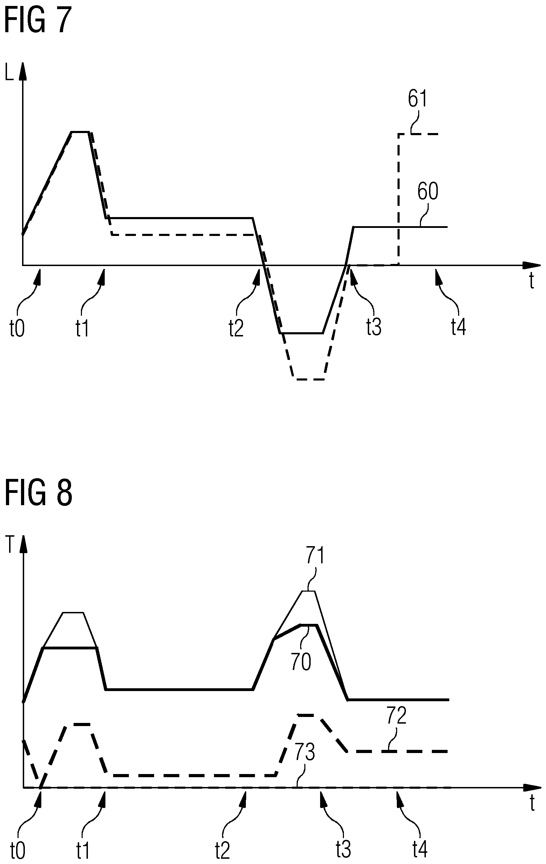

Fig. 7 zeigt ein Beispiel für die berechnete Leistung L, die bei einer optimierten Aufteilung der Gesamtleistung während einer Fahrt vom Energieversorgungsnetz bezogen wird (durchgezogene Linie 60), im Vergleich zu einem Verfahren ohne Optimierung (gestrichelte Linie 61). In diesem Beispiel ist eine Randbedingung der Optimierung, dass das Batteriesystem nicht entladen werden soll. Positive Werte bedeuten eine Einspeisung in das elektrische System des Fahrzeugs, negative Werte eine Rückspeisung in das Energieversorgungsnetz. Die Fahrstecke ist durchgehend von dem Energieversorgungsnetz versorgt. Als Bewertungskriterium dient der Gesamtverlust.

Zwischen t0 und t1 sind die berechneten Leistungen 60, 61 (mit und ohne Optimierung) gleich, da eine mögliche Leistungsbereitstellung durch das Batteriesystem nicht in die Optimierung einbezogen wird. Zwischen t1 und t2 wird das Batteriesystem geladen, sodass das optimierte Szenario einen höheren Leistungsbezug aus dem Energieversorgungsnetz zeigt als das nicht-optimierte Szenario. Auch zwischen t2 und t3 wird die Batterie geladen, was zu einer geringeren Einspeisung in das Energieversorgungsnetz führt. Beim optimierten Verfahren kann das Aufladen des Batteriesystems mit sehr hoher Leistung zwischen t3 und t4 vermieden werden, da die Batterie bereits zwischen t1 und t3 im erforderlichen Maß aufgeladen wurde.

Fig. 8 zeigt, basierend auf dem Beispiel der Fig. 5, den jeweiligen Verlauf der Temperatur T über der Zeit t des Gleichrichters der Netzeinspeisungseinheit 3 (durchgezogene Linien 70, 71) und des Gleichspannungswandlers der Batterieeinspeisungseinheit 5 (gestrichelte Linien 72, 73), jeweils mit Optimierung (dicke Linie 70 bzw. 72) und ohne Optimierung (dünne Linie 71 bzw. 73). Durch die Optimierung bzw. durch die Verteilung der Gesamtleistung auf die beiden Energiequellen Energieversorgungsnetz 2 und Batteriesystem 4 werden die Temperaturspitzen bzw. Temperaturhübe der Leistungshalbleiterbauelemente des Gleichrichters aufgrund der reduzierten Leistungsaufnahme aus dem Energieversorgungsnetz 2 deutlich reduziert, wodurch deren Lebensdauer erhöht wird. Demgegenüber ist die Temperaturerhöhung der Leistungshalbleiterbauelemente des Gleichspannungswandlers nur moderat und mit einer nur geringfügigen Verkürzung seiner Lebensdauer verbunden. Das Optimierungsverfahren bezieht die Temperatur oder die Lebensdauer von Leistungshalbleiterbauelementen der Einspeisungseinheiten als ein weiteres Bewertungskriterium bei der Aufteilung der Gesamtleistung auf die beiden Energiequellen ein, wobei die verschiedenen Bewertungskriterien in gewünschter Weise gegeneinander abgewogen werden.

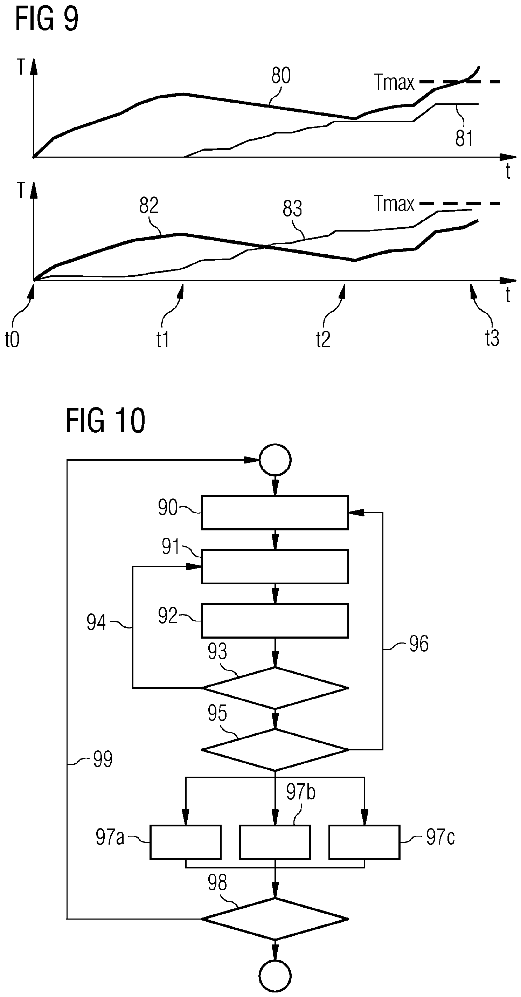

Fig. 9 zeigt im oberen Teil einen zeitlichen Temperaturverlauf des Transformators (durchgezogene dicke Linie 80) der Netzeinspeisungseinheit 2 und des Batteriesystems 4 (durchgezogene dünne Linie 81) ohne Optimierung hinsichtlich des Bewertungskriteriums der Temperatur bzw. der Lebensdauer. Im unteren Teil sind der Temperaturverlauf des Transformators (durchgezogene dicke Linie 82) und des Batteriesystems (durchgezogene dünne Linie 83) mit Optimierung, also einer optimierten Aufteilung der Gesamtleistung auf die beiden Energiequellen, dargestellt. Der zeitliche Verlauf der entsprechenden Innenwiderstände dieser Komponenten ist dabei qualitativ gleich oder zumindest sehr ähnlich dem Temperaturverlauf, da Verluste insbesondere die Temperaturentwicklung der Innenwiderstände dieser Komponenten, insbesondere des jeweiligen Innenwiderstands der Batteriezellen des Batteriesystems, beeinflussen und die Temperatur wiederum den Wert der Innenwiderstände und diese die Verlustleistung bestimmen.

Zwischen t0 und t1 sowie zwischen t2 und t3 durchfährt das Fahrzeug beispielhaft einen jeweils von dem Energieversorgungsnetz versorgten Streckenabschnitt, zwischen t1 und t2 liegt hingegen ein netzloser Streckenabschnitt, in welchem ausschließlich Energie des Batteriesystems zur Verfügung steht. Ohne Optimierung wird in den netzversorgten Abschnitten die Leistung ausschließlich aus dem Versorgungsnetz bezogen, sodass die Netzeinspeisungseinheit 2 und insbesondere der Transformator stark erwärmt wird. Zwischen t1 und t2 wird zwar die Leistung ausschließlich aus dem Batteriesystem 4 bezogen, die Temperatur des Transformators sinkt jedoch nur langsam. Dies kann wie dargestellt dazu führen, dass ab dem Zeitpunkt t3 und dem wiederum ausschließlichen Bezug der Leistung aus dem Energieversorgungsnetz die vorgegebene erlaubte Maximaltemperatur Tmax des Transformators überschritten wird.

Durch das Optimierungsverfahren kann der vorausschauend berechnete Temperaturverlauf so geändert werden, dass die erlaubte Maximaltemperatur Tmax des Transformators nicht überschritten wird, wie im unteren Teil von Fig. 9 an dem Temperaturverlauf (82) des Transformators und des Batteriesystems (83) erkennbar ist. Die Temperatur dieser Komponenten des elektrischen Systems des Fahrzeugs wird als Bewertungskriterium oder als weiteres Bewertungskriterium in dem Verfahren berücksichtigt. Als Ergebnis wird die Leistungsverteilung so gesteuert, dass vor dem Zeitpunkt t1, also in einem von dem Energieversorgungsnetz versorgten Streckenabschnitt, eine Aufteilung der Gesamtleistung auf die beiden Energiequellen erfolgt, wodurch die Temperatur des Transformators weniger bzw. auf einen niedrigeren Wert ansteigt. Im anschließenden netzlosen Abschnitt sinkt die Temperatur des Transformators wieder, und zwischen t2 und t3, dem nächsten von dem Energieversorgungsnetz versorgten Streckenabschnitt, wird die Gesamtleistung wieder auf beide Energiequellen so aufgeteilt, dass die Temperatur des Transformators nicht über die erlaubte Maximaltemperatur Tmax ansteigt. Ergänzend können während des Befahrens eines von dem Energieversorgungsnetz versorgten Streckenabschnitts beispielsweise vorausschauend ein oder mehrere Abkühlphasen für den Transformator vorgesehen werden, in denen die Batterie einen größeren bzw. überwiegenden Anteil an der Gesamtleistung übernimmt, wodurch der Transformator weniger belastet wird.

Fig. 10 zeigt schematisch den Verfahrensablauf bei Berücksichtigung weiterer Bewertungskriterien. Nach dem Start wird in Schritt 90 die benötigte Gesamtenergie für einen Streckenabschnitt i bestimmt. In Schritt 91 wird eine Aufteilung der bestimmten Gesamtenergie auf das Energieversorgungsnetz und das Batteriesystem vorgenommen. In Schritt 92 werden die sich jeweils ergebenden Einzelverluste und aus diesen der Gesamtverlust bestimmt. In Schritt 93 wird geprüft, ob das Optimum bzw. das Minimum der Gesamtverluste für den Streckenabschnitt i erreicht ist. Falls nein, wird durch Variation der Aufteilung der Gesamtverlust minimiert (Schleife 94). Wenn das Optimum erreicht ist, wird in Schritt 95 geprüft, ob alle Streckenabschnitte der zu befahrenden Strecke optimiert sind und, sofern dies nicht der Fall ist, das Verfahren für einen weiteren Streckenabschnitt i+1 durchgeführt (Schleife 96).

Wenn alle Streckenabschnitte der Strecke optimiert sind, werden ein oder mehrere weitere Bewertungskriterien geprüft (Schritte 97a bis 97c). Für das soweit optimierte Verfahren wird beispielsweise die Lebensdauer einer Komponente, der Temperaturverlauf einer Komponente und/oder der aktuelle und/oder der benötigte Ladezustand des Batteriesystems bestimmt. Wenn diese in einem vorgegebenen Zielbereich liegen (Schritt 98), stellt das gemäß Schritt 95 optimierte Verfahren das endgültige Verfahren dar, mit dem der Betrieb des Fahrzeugs gesteuert wird. Wenn einer der Parameter bzw. eines der weiteren Kriterien außerhalb des vorgegebenen Zielbereichs liegt, wird die Aufteilung in Schritt 91 geändert und das Verfahren erneut durchlaufen (Schleife 99), bis der oder die Parameter im Zielbereich liegen oder optimiert sind. Vorzugsweise wird die Aufteilung zunächst für die Streckenabschnitte i geändert, in denen sich dabei die bestimmte optimale Aufteilung auf die Energiequellen am wenigsten ändert.

## Patentansprüche

1. Verfahren zum Steuern einer Versorgung eines elektrischen Systems (1) eines spurgebundenen Fahrzeugs mit elektrischer Energie, wobei das System (1) mit einer ersten und mit einer zweiten Energiequelle alternativ und gleichzeitig betreibbar ist, wobei die erste Energiequelle ein fahrzeugexternes Energieversorgungsnetz (2) und die zweite Energiequelle ein fahrzeuginternes Batteriesystem (4) ist,
umfassend folgende Schritte:
- Bestimmen einer von den Energiequellen bereitzustellenden Gesamtleistung für zumindest einen von der ersten Energiequelle versorgten Streckenabschnitt einer von dem Fahrzeug zu befahrenden Strecke ist, und
- Aufteilen der ermittelten Gesamtleistung auf die erste und die zweite Energiequelle, wobei, unter Variation eines Anteils der ersten Energiequelle an der Gesamtleistung, die Aufteilung hinsichtlich eines jeweiligen Wertes zumindest eines Bewertungskriteriums optimiert wird.

2. Verfahren nach Anspruch 1, wobei
das Bewertungskriterium eine Verlustleistung von mit den Energiequellen jeweils verbundenen Komponenten (3, 5) des Systems (1) ist, wobei die Aufteilung hinsichtlich einer Gesamt-Verlustleistung optimiert wird.

3. Verfahren nach Anspruch 1 oder 2, wobei
das Bewertungskriterium eine für den jeweiligen Streckenabschnitt oder die Strecke benötigte Gesamtenergie ist.

4. Verfahren nach einem der vorstehenden Ansprüche, wobei
das Bewertungskriterium für den jeweiligen Streckenabschnitt oder die Strecke verursachte Energiekosten des Energieversorgungsnetzes (2) sind.

5. Verfahren nach einem der vorstehenden Ansprüche, wobei
das Bewertungskriterium ein Ladezustand des Batteriesystems (4) nach Befahren eines von der ersten Energiequelle versorgten Streckenabschnitts ist.

6. Verfahren nach einem der vorstehenden Ansprüche, wobei
das Bewertungskriterium Betriebsdaten von mit der jeweiligen Energiequelle verbundenen elektrischen Komponenten (3, 5) des Systems sind, welche eine Lebensdauer der Komponenten (3, 5) beeinflussen.

7. Verfahren nach einem der vorstehenden Ansprüche, wobei
das Bewertungskriterium Betriebsdaten des Batteriesystems (4) sind.

8. Verfahren nach einem der vorstehenden Ansprüche, wobei
das Bewertungskriterium Daten des jeweiligen Streckenabschnitts oder der Strecke sind.

9. Spurgebundenes Fahrzeug, mit zumindest einem elektrischen System (1), das mit zwei unterschiedlichen Energiequellen alternativ und gleichzeitig betreibbar ist, wobei das System (1) eine Steuereinheit (6) umfasst, welche zur Durchführung zumindest des Verfahrens nach einem der Ansprüche 1 bis 8 ausgestaltet ist.

10. Fahrzeug nach Anspruch 9, wobei das elektrische System (1) zumindest eine Netzeinspeisungseinheit (3), welche mit einem Energieversorgungsnetz (2) verbindbar ist, und zumindest eine Batterieeinspeisungseinheit (5), welche mit einem Batteriesystem (4) verbunden ist, umfasst.

11. Fahrzeug nach Anspruch 9 oder 10, **dadurch gekennzeichnet, dass** das elektrische System (1) ein Antriebssystem mit zumindest einem Antriebsmotor (9) und ein Hilfsbetriebesystem mit zumindest einem Hilfsbetrieb (10) umfasst.
